# EUROPEAN PATENT APPLICATION

(11) **EP 4 414 329 A1**
(43) Date of publication of application: **14.08.2024**
(21) Application number: 23212022.0
(22) Date of filing: 24.11.2023
(51) Int. Cl.: C01C 1/04, F25J 3/04

(54) **AMMONIA SYNTHESIS SYSTEM BASED ON FLUCTUATING HYDROGEN SOURCE AND CONTROL METHOD THEREOF**

(30) Priority: 13.02.2023 CN 202310140551
(71) Applicant: Sungrow Hydrogen Sci.&Tech. Co., Ltd., Hefei 230088, Anhui (CN)
(72) Inventor: ZHANG, Wenbiao, Hefei (CN); PENG, Chaocai, Hefei (CN); JIA, Guoliang, Hefei (CN); WANG, Lei, Hefei (CN); TANG, Chao, Hefei (CN); SUN, Longlin, Hefei (CN); WU, Linlin, Hefei (CN)
(74) Representative: Rooney, John-Paul

(57) **Abstract**

An ammonia synthesis system and a control method thereof are provided. The ammonia synthesis system includes a hydrogen supply device, where a fluctuating amount of hydrogen is provided by the hydrogen supply device; a hydrogen storage container configured to store the hydrogen provided by the hydrogen supply device; and a nitrogen supply device configured to communicate with the hydrogen storage container to introduce nitrogen into the hydrogen storage container to maintain a stable pressure in the hydrogen storage container. The nitrogen supply device is able to introduce nitrogen into the hydrogen storage container, thus the amount of hydrogen provided is stable; in addition, the ammonia synthesis system can not only meet requirements of application scenarios where synthesis gas is produced from conventional raw material, but also be well applied to application scenarios where hydrogen for ammonia synthesis is obtained from hydrogen generation by green electricity.

## Description

### FIELD

The present disclosure relates to the technical field of synthetic ammonia, and in particular to an ammonia synthesis system based on a fluctuating hydrogen source and a control method thereof.

### BACKGROUND

The conventional and mature ammonia synthesis process utilizes fossil energy (coal, fossil oil, natural gas, petrochemical tail gas and the like) as a raw material to produce ammonia synthesis gas, and the source of the synthesis gas is relatively stable. The ammonia synthesis process can be adjusted according to quality parameters of the ammonia synthesis gas (temperature, pressure, flow, composition and the like) to meet production requirements.

At present, in order to accelerate the green industry development, effectively promote energy conservation and consumption reduction, to save cost reduction and improve efficiency, various ammonia production technologies have attracted more and more attention, such as synthesizing ammonia by hydrogen generation by green electricity. However, there is a contradiction between instable hydrogen supply provided by the hydrogen generation device using green electricity and high stability of hydrogen supply required by conventional ammonia synthesis. Therefore, a technical problem to be solved is to break through the above technical difficulty.

### SUMMARY

In view of this, an object of the present disclosure is to provide an ammonia synthesis system based on a fluctuating hydrogen source and a control method thereof, which, in addition to meeting requirements of application scenarios where synthesis gas is produced from conventional raw material, can also be well applied to application scenarios where hydrogen supply for ammonia synthesis fluctuates, for example, application scenarios where raw material hydrogen for ammonia synthesis is obtained from hydrogen generation by unstable green electricity (with regular or irregular fluctuations) such as wind power, photovoltaic power and hydropower, and even in the case that the green electricity fluctuates in the full load range of 0-100%, the stable production of synthetic ammonia can also be ensured.

An ammonia synthesis system based on a fluctuating hydrogen source is provided according to one aspect of the present disclosure, comprising:
a hydrogen supply device, where a fluctuating amount of hydrogen is provided by the hydrogen supply device;
a hydrogen storage container, configured to store the hydrogen provided by the hydrogen supply device;
a nitrogen supply device, configured to communicate with the hydrogen storage container to introduce nitrogen into the hydrogen storage container to maintain a stable pressure in the hydrogen storage container.

In an embodiment, the hydrogen storage container includes multiple hydrogen storage containers for storing hydrogen at different pressures, the number of the multiple hydrogen storage containers is two or more; the nitrogen supply device is connected to each of the multiple hydrogen storage containers, to maintain a stable pressure in each of the multiple hydrogen storage containers by supplementary nitrogen.

In an embodiment, the multiple hydrogen storage containers include a low-pressure hydrogen storage container, a medium-pressure hydrogen storage container, and a high-pressure hydrogen storage container.

In an embodiment, the ammonia synthesis system based on the fluctuating hydrogen source further includes a combined compression system, and the combined compression system at least includes a hydrogen compressor unit; wherein the hydrogen compressor unit is provided with a gas inlet being connected to the hydrogen supply device, and a gas outlet being connected to an ammonia synthesis unit.

In an embodiment, the low-pressure hydrogen storage container is connected to a hydrogen outlet of the hydrogen supply device; the medium-pressure hydrogen storage container is connected to an inter-segment gas outlet of the hydrogen compressor unit; the high-pressure hydrogen storage container is connected to the gas outlet of the hydrogen compressor unit.

In an embodiment, the nitrogen supply device is configured to supply nitrogen through a bottom of each of the hydrogen storage containers.

In an embodiment, the nitrogen supply device is an air separation device, and the air separation device includes a nitrogen generation device and/or a backup nitrogen system.

In an embodiment, in a case that the nitrogen supply device is the nitrogen generation device, two flow paths are provided for the nitrogen drawn from the nitrogen generation device, one of the two flow paths is in communication with the hydrogen storage container, and the other of the two flow paths is configured to provide a nitrogen source for an ammonia synthesis reaction.

In an embodiment, the low-pressure hydrogen storage container is a vertical pressure vessel or a spherical pressure vessel, where the hydrogen can flow in both directions in a pipeline between the low-pressure hydrogen storage container and the gas inlet of the hydrogen compressor unit to reach an equal pressure.

In an embodiment, the medium-pressure hydrogen storage container is a vertical high-pressure hydrogen storage container, where the hydrogen can flow in both directions between the medium-pressure hydrogen storage container and an intermediate stage of the hydrogen compressor unit to reach an equal pressure.

In an embodiment, the high-pressure hydrogen storage container is a high-pressure hydrogen storage pipe bundle, where the hydrogen can flow in both directions in a pipeline between the high-pressure hydrogen storage container and the gas outlet of the hydrogen compressor unit to reach an equal pressure.

In an embodiment, the combined compression system further includes a nitrogen compressor unit and a circulating gas compressor unit, where the nitrogen compressor unit is provided with a gas inlet being connected to the nitrogen supply device, and a gas outlet being connected to the ammonia synthesis unit; and the circulating gas compressor unit is configured to compress circulating gas discharged from the ammonia synthesis unit for recycling.

In an embodiment, the ammonia synthesis system based on the fluctuating hydrogen source further includes a control center configured to control the combined compression system, the nitrogen supply device and the ammonia synthesis unit.

In an embodiment, the ammonia synthesis system based on the fluctuating hydrogen source is applicable to scenarios including ammonia synthesis by hydrogen generation via new energy, ammonia synthesis by hydrogen generation via fixed bed gas production, and ammonia synthesis by hydrogen generation via plasma gasification.

A control method for an ammonia synthesis system based on a fluctuating hydrogen source is provided according to another aspect of the present disclosure. The ammonia synthesis system is the ammonia synthesis system as described in any one of the above solutions of the present disclosure, and the control method is applied to a control center of the ammonia synthesis system.

The control method includes:
determining whether a pressure in the hydrogen storage container of the ammonia synthesis system is less than a preset pressure value; and
in a case that the pressure in the hydrogen storage container is less than the preset pressure value, controlling the nitrogen supply device of the ammonia synthesis system to introduce nitrogen into the hydrogen storage container firstly, and then returning to perform the step of determining whether the pressure in the hydrogen storage container of the ammonia synthesis system is less than the preset pressure value.

In an embodiment, before the step of determining whether the pressure in the hydrogen storage container of the ammonia synthesis system is less than the preset pressure value, the control method further includes:
determining whether an amount of hydrogen provided by the hydrogen supply device of the ammonia synthesis system fluctuates; and
in a case that the amount of hydrogen provided by the hydrogen supply device fluctuates, performing the step of determining whether the pressure in the hydrogen storage container of the ammonia synthesis system is less than the preset pressure value.

In an embodiment, the control method further includes:
determining whether a ratio of hydrogen to nitrogen in the hydrogen and nitrogen introduced into the ammonia synthesis unit of the ammonia synthesis system is greater than a set ratio; and
in a case that the ratio of hydrogen to nitrogen is greater than the set ratio, increasing an amount of nitrogen introduced by the nitrogen supply device to the ammonia synthesis unit according to a difference between the ratio of hydrogen to nitrogen and the set ratio.

In an embodiment, in a case that the ratio of hydrogen to nitrogen is less than the set ratio, the control method further includes:
decreasing the amount of nitrogen introduced by the nitrogen supply device to the ammonia synthesis unit according to the difference between the ratio of hydrogen to nitrogen and the set ratio.

In an embodiment, in a case that the ammonia synthesis system includes the nitrogen compressor unit, the step of increasing or decreasing the amount of nitrogen introduced by the nitrogen supply device to the ammonia synthesis unit includes:
increasing or decreasing a workload of the nitrogen compressor unit.

The present disclosure provides an ammonia synthesis system based on a fluctuating hydrogen source, including: a hydrogen supply device, where a fluctuating amount of hydrogen is provided by the hydrogen supply device; a hydrogen storage container, configured to store the hydrogen provided by the hydrogen supply device; a nitrogen supply device, configured to communicate with the hydrogen storage container to introduce nitrogen into the hydrogen storage container to maintain a stable pressure in the hydrogen storage container. Since the nitrogen supply device is configured to introduce nitrogen into the hydrogen storage container to maintain the stable pressure in the hydrogen storage container, the ammonia synthesis system itself keeps a stable amount of hydrogen supply. Besides, the hydrogen supply device that provides fluctuating amount of hydrogen may be, for example, a hydrogen supply device that uses green electricity to produce hydrogen, therefore, the ammonia synthesis system based on a fluctuating hydrogen source provided by the present disclosure can not only meet requirements of application scenarios where synthesis gas is produced from conventional raw material, but also be well applied to application scenarios where the hydrogen supply for ammonia synthesis fluctuates, for example the application scenarios where raw material hydrogen for ammonia synthesis is obtained from hydrogen generation by unstable green electricity (with regular or irregular fluctuations) such as wind power, photovoltaic power and hydropower, and even in the case that the green electricity fluctuates in the full load range of 0-100%, the stable production of synthetic ammonia can also be ensured. Compared with the conventional ammonia synthesis process with gaseous hydrogen storage, the system provided by the present disclosure can achieve 100% reuse rate of gaseous hydrogen storage without decompression, that is, there is no pressure loss in hydrogen storage for reuse, thus effectively ensuring technical economy and operation and maintenance economy of the device.

### BRIEF DESCRIPTION OF THE DRAWINGS

Figure 1 is a schematic diagram of an ammonia synthesis system based on a fluctuating hydrogen source according to an embodiment of the present disclosure; and
Figures 2 to 4 are respectively schematic flow diagrams of three solutions of a control method for an ammonia synthesis system based on a fluctuating hydrogen source according to an embodiment of the present disclosure.

### DETAILED DESCRIPTION OF EMBODIMENTS

The technical solution of the present disclosure will be clearly and completely described below with reference to the embodiments of the present disclosure. Obviously, the described embodiments are only a part, rather than all, of the embodiments of the present disclosure. Based on the embodiments of the present disclosure, all other embodiments obtained by those of ordinary skill in the art without creative efforts fall within the scope of protection of the present disclosure.

An ammonia synthesis system based on a fluctuating hydrogen source is provided according to the present disclosure, including:
a hydrogen supply device, where a fluctuating amount of hydrogen is provided by the hydrogen supply device;
a hydrogen storage container, configured to store the hydrogen provided by the hydrogen supply device; and
a nitrogen supply device, configured to communicate with the hydrogen storage container to introduce nitrogen into the hydrogen storage container to maintain a pressure stable in the hydrogen storage container.

In an embodiment, the hydrogen storage container preferably includes multiple hydrogen storage containers for storing hydrogen at different pressures, the number of the multiple hydrogen storage containers is preferably greater than or equal to two; the nitrogen supply device is connected to the multiple hydrogen storage containers respectively, to ensure a stable pressure in each of the multiple hydrogen storage containers by supplementary nitrogen.

In an embodiment, the multiple hydrogen storage containers preferably include a low-pressure hydrogen storage container, a medium-pressure hydrogen storage container and a high-pressure hydrogen storage container.

In an embodiment, the ammonia synthesis system based on the fluctuating hydrogen source preferably further includes a combined compression system, and the combined compression system at least includes a hydrogen compressor unit; where the hydrogen compressor unit is provided with a gas inlet being connected to the hydrogen supply device, and a gas outlet being connected to an ammonia synthesis unit.

In an embodiment, the low-pressure hydrogen storage container is connected to a hydrogen outlet of the hydrogen supply device; the medium-pressure hydrogen storage container is connected to an inter-segment gas outlet of the hydrogen compressor unit; and the high-pressure hydrogen storage container is connected to the gas outlet of the hydrogen compressor unit.

In an embodiment, the nitrogen supply device is configured to supply nitrogen through a bottom of each of the hydrogen storage containers.

In an embodiment, the nitrogen supply device may only include an air separation device, alternatively, the nitrogen supply device may include an air separation device and a nitrogen storage device; where the air separation device includes a nitrogen generation device and/or a backup nitrogen system.

In a preferable embodiment, the nitrogen supply device is the nitrogen generation device, two flow paths are provided for the nitrogen drawn from the nitrogen generation device, one flow path is in communication with the hydrogen storage container, and the other flow path is configured to provide a nitrogen source for an ammonia synthesis reaction.

It should be noted that in the case that the nitrogen supply device only includes the air separation device, the two flow paths are led out from the air separation device. In this case, it is preferred that two flow paths are led out from each device in the air separation device. In the case that the nitrogen supply device comprises the air separation device and the nitrogen storage device, the two flow paths may be led out from the nitrogen storage device and the air separation device separately. In this case, it is preferred that one corresponding flow path is led out from each device in the air separation device.

In an embodiment, the low-pressure hydrogen storage container is a vertical pressure vessel or a spherical pressure vessel; where the hydrogen is allowed to flow in both directions in a pipeline between the low-pressure hydrogen storage container and the gas inlet of the hydrogen compressor unit to reach an equal pressure.

In an embodiment, the medium-pressure hydrogen storage container is preferably a vertical high-pressure hydrogen storage container; where the hydrogen can flow in both directions between the medium-pressure hydrogen storage container and a position between segments of the hydrogen compressor unit to reach an equal pressure.

In an embodiment, the high-pressure hydrogen storage container is a high-pressure hydrogen storage pipe bundle; where the hydrogen can flow in both directions in a pipeline between the high-pressure hydrogen storage container and the gas outlet of the hydrogen compressor unit to reach an equal pressure.

In an embodiment, the combined compression system further includes a nitrogen compressor unit and a circulating gas compressor unit; where the nitrogen compressor unit is provided with a gas inlet being connected to the nitrogen supply device, and a gas outlet being connected to the ammonia synthesis unit; and the circulating gas compressor unit is configured to compress circulating gas discharged from the ammonia synthesis unit for recycling.

In an embodiment, the ammonia synthesis system based on a fluctuating hydrogen source further includes a control center configured to control the combined compression system, the nitrogen supply device and the ammonia synthesis unit.

In the present disclosure, the ammonia synthesis system based on the fluctuating hydrogen source is applicable to scenarios including ammonia synthesis by hydrogen generation via new energy, ammonia synthesis by hydrogen generation via fixed bed gas production, and ammonia synthesis by hydrogen generation via plasma gasification.

Since the nitrogen supply device is configured to introduce nitrogen into the hydrogen storage container to maintain the stable pressure in the hydrogen storage container, the ammonia synthesis system itself keeps a stable amount of hydrogen supply. Besides, the hydrogen supply device that provides fluctuating amount of hydrogen may be, for example, a hydrogen supply device that uses green electricity to produce hydrogen, therefore, the ammonia synthesis system based on the fluctuating hydrogen source provided by the present disclosure can not only meet requirements of application scenarios where synthesis gas is produced from conventional raw material, but also be well applied to application scenarios where the hydrogen supply for ammonia synthesis fluctuates, for example, the application scenarios where raw material hydrogen for ammonia synthesis is obtained from hydrogen generation by unstable green electricity (with regular or irregular fluctuations) such as wind power, photovoltaic power and hydropower, and even in the case that the green electricity fluctuates in the full load range of 0-100%, the stable production of synthetic ammonia can also be ensured. Compared with the conventional ammonia synthesis process with gaseous hydrogen storage, the system provided by the present disclosure can achieve 100% reuse rate of gaseous hydrogen storage without decompression, that is, there is no pressure loss in hydrogen storage for reuse, thus effectively ensuring the technical economy and operation and maintenance economy of the device.

The above ammonia synthesis system based on the fluctuating hydrogen source is further illustrated hereinafter by taking an ammonia synthesis system with hydrogen generation by green electricity as an example.

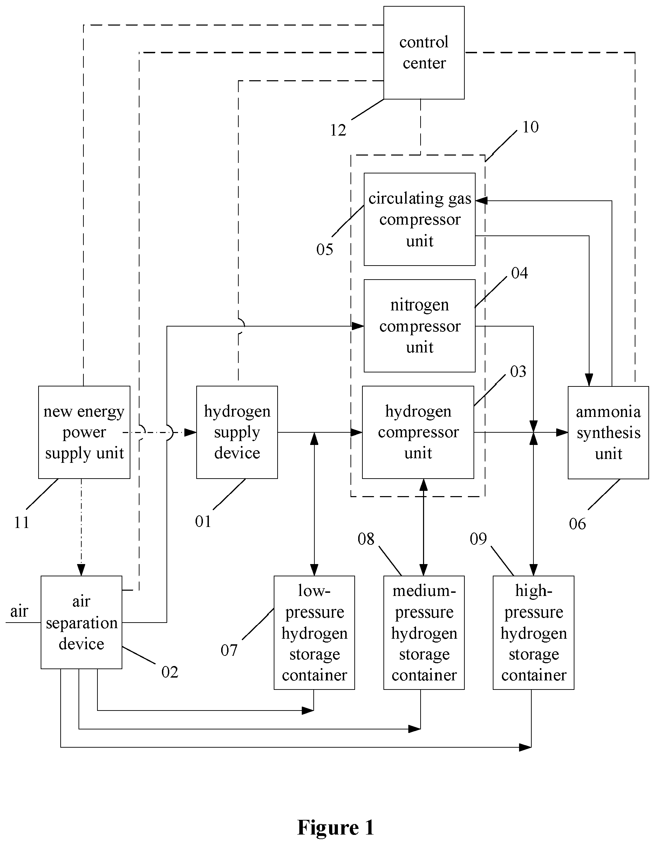

Referring to Figure 1, Figure 1 is a schematic diagram of an ammonia synthesis system based on a fluctuating hydrogen source according to an embodiment of the present disclosure. Reference numeral 11 represents a new energy power supply unit, 10 represents a combined compression system, 01 represents a hydrogen supply device, 02 represents an air separation device, 03 represents a hydrogen compressor unit, represents a nitrogen compressor unit, 05 represents a circulating gas compressor unit, 06 represents an ammonia synthesis unit, 07 represents a low-pressure hydrogen storage container, 08 represents a medium-pressure hydrogen storage container, 09 represents a high-pressure hydrogen storage container, and 12 represents a control center.

On this basis, the overall ammonia synthesis system based on the fluctuating hydrogen source includes:
a combined compression system 10, where the combined compression system 10 is provided with a hydrogen compressor unit 03, a nitrogen compressor unit 04 and a circulating gas compressor unit 05;
a hydrogen supply device 01 connected to a gas inlet of the hydrogen compressor unit 03;
a new energy power supply unit 11 configured to provide electric energy to the hydrogen supply device 01;
an air separation device 02 connected to a gas inlet of the nitrogen compressor unit 03; where the air separation device 02 is provided with an air inlet;
an ammonia synthesis unit 06, connected to a gas outlet of the hydrogen compressor unit 03 and a gas outlet of the nitrogen compressor unit 04 respectively; where the ammonia synthesis unit 06 is provided with a circulating gas outlet and a circulating gas inlet, which are respectively connected to the circulating gas compressor unit 05; and
a low-pressure hydrogen storage container 07, a medium-pressure hydrogen storage container 08, and a high-pressure hydrogen storage container 09, which are connected to the air separation device 02 respectively; where the low-pressure hydrogen storage container 07 is connected to a hydrogen outlet of the hydrogen supply device 01, and the medium-pressure hydrogen storage container 08 is connected to an inter-segment gas outlet of the hydrogen compressor unit 03, and the high-pressure hydrogen storage container 09 is connected to the gas outlet of the hydrogen compressor unit 03. Herein, the medium-pressure hydrogen storage container is connected to the inter-segment gas outlet of the hydrogen compressor unit means that, the medium-pressure hydrogen storage container is connected to a gas pipe led from a position between segments of the hydrogen compressor unit.

The ammonia synthesis system based on the fluctuating hydrogen source provided by the present disclosure can solve the problem of energy loss during hydrogen storage and reuse in the ammonia synthesis process with hydrogen generation by unstable green electricity.

In the present disclosure, the ammonia synthesis system based on the fluctuating hydrogen source includes the combined compression system 10, the hydrogen supply device 01, the new energy power supply unit 11, the air separation device 02, the ammonia synthesis unit 06, the low-pressure hydrogen storage container 07, the medium-pressure hydrogen storage container 08 and the high-pressure hydrogen storage container 09.

In the present disclosure, the combined compression system 10 is provided with the hydrogen compressor unit 03, the nitrogen compressor unit 04 and the circulating gas compressor unit 05; where the hydrogen compressor unit 03 is provided with the above gas inlet, the gas outlet and an equal pressure bidirectional flow pipeline. The gas inlet (hydrogen inlet) is connected to the hydrogen supply device 01. The nitrogen compressor unit 04 is provided with the gas inlet and the gas outlet, the above gas inlet (nitrogen inlet) is connected to the air separation device 02. The circulating gas compressor unit 05 is provided with a circulating gas inlet and a circulating gas outlet, where the circulating gas inlet of the circulating gas compressor unit 05 is connected to the circulating gas outlet of the ammonia synthesis unit 06, and the circulating gas outlet of the circulating gas compressor unit 05 is connected to the circulating gas inlet of the ammonia synthesis unit 06.

In the present disclosure, the hydrogen supply device 01 is configured for hydrogen generation. In the present disclosure, the pressure of hydrogen generated by the hydrogen supply device preferably ranges from 1.5MPa to 4.5MPa.

In the present disclosure, the new energy power supply unit 11 provides electric energy for the hydrogen supply device 01. The new energy power supply unit includes, but is not limited to, a wind power new energy power supply unit, a photovoltaic new energy power supply unit or a hydropower new energy power supply unit.

There is a contradiction between instability of the above hydrogen generation by green electricity and the high stability of the hydrogen source required by conventional ammonia synthesis. The key point of the present disclosure is to provide an ammonia synthesis system based on a fluctuating hydrogen source, which can provide an energy-saving, stable and reliable technology for the hydrogen storage process in the field of ammonia synthesis with hydrogen generation by green electricity, to provide an energy-saving solution to overcome technical difficulty and the contradictions between the instability of green electricity hydrogen generation and the high stability of hydrogen sources required by traditional ammonia synthesis.

In the present disclosure, the air separation device 02 is configured for nitrogen generation and is provided with an air inlet and a nitrogen outlet. The air separation device 02 is connected to the gas inlet of the nitrogen compressor unit 04 through the nitrogen outlet.

In the present disclosure, the air separation device 02 includes a nitrogen generation device and/or a backup nitrogen system, where the nitrogen generation device is configured to provide nitrogen for the hydrogen storage container and the nitrogen outlet under normal conditions, and the backup nitrogen system is configured to provide nitrogen to the hydrogen storage container and the nitrogen outlet in a case that the nitrogen generation device is shut down, so as to maintain the normal operation of the ammonia synthesis system.

In the present disclosure, the pressure of the high-pressure nitrogen after being increased by the nitrogen compressor unit 04 preferably ranges from 14MPa to 22MPa.

In the present disclosure, the ammonia synthesis unit 06 is configured to produce ammonia, and the ammonia synthesis unit 06 is provided with a hydrogen inlet, a nitrogen inlet, a circulating gas outlet and a circulating gas inlet, where the ammonia synthesis unit 06 is connected to the gas outlet of the hydrogen compressor unit 03 through the hydrogen inlet, and is connected to the gas outlet of the nitrogen compressor unit 04 through the nitrogen inlet; the circulating gas outlet and the circulating gas inlet of the ammonia synthesis unit 06 are respectively connected to the circulating gas compressor unit 05.

In the present disclosure, the low-pressure hydrogen storage container 07, the medium-pressure hydrogen storage container 08 and the high-pressure hydrogen storage container 09 are respectively connected to the air separation device 02. The low-pressure hydrogen storage container 07 is connected to the hydrogen outlet of the hydrogen supply device 01, the medium-pressure hydrogen storage container 08 is directly connected to the position between segments of the hydrogen compressor unit 03, and the high-pressure hydrogen storage container 09 is connected to the gas outlet of the hydrogen compressor unit 03. In a case that the pressure in each of the low-pressure hydrogen storage container 07, the medium-pressure hydrogen storage container 08 and the high-pressure hydrogen storage container 09 is less than the pressure in the corresponding connecting pipeline, the hydrogen flows into the corresponding hydrogen storage container from the corresponding connecting pipeline until the pressures of the two are equal; in a case that the pressure in the corresponding hydrogen storage container is greater than the pressure in the corresponding connecting pipeline, the hydrogen flows from the corresponding hydrogen storage container into the corresponding connecting pipeline until the pressures of the two are equal.

In the present disclosure, the low-pressure hydrogen storage container 07 preferably is a vertical pressure vessel or a spherical pressure vessel, where a storage pressure thereof is applicable to various types of electrolytic hydrogen generation processes such as ALK, PEM, AME, and the like. The hydrogen storage pressure ranges from 1.5MPa to 4.5MPa. The hydrogen can flow in both directions in the pipeline between the low-pressure hydrogen storage container 07 and the gas inlet of the hydrogen compressor unit 03 to reach an equal pressure.

In the present disclosure, the medium-pressure hydrogen storage container 08 preferably is a vertical high-pressure hydrogen storage container. Medium-pressure hydrogen is drawn from a position between segments of the hydrogen compressor unit of the ammonia synthesis system, where the hydrogen storage pressure preferably ranges from 6MPa to 12MPa. The hydrogen can flow in both directions between the medium-pressure hydrogen storage container 08 and the position between segments of the hydrogen compressor unit 03 to reach an equal pressure. It can be understood that, the compression of the hydrogen compressor unit 03 is divided into at least two segments (or called stages).

In the present disclosure, the high-pressure hydrogen storage container 09 preferably is a high-pressure hydrogen storage pipe bundle. The hydrogen storage pressure meets technical requirements of various traditional ammonia synthesis processes. The hydrogen storage pressure ranges from 12MPa to 22MPa. The hydrogen can flow in both directions in the pipeline between the high-pressure hydrogen storage container 09 and the gas outlet of hydrogen compressor unit 03 to reach an equal pressure.

The above high-pressure hydrogen storage, medium-pressure hydrogen storage and low-pressure hydrogen storage are coupled in the present disclosure. By rationally allocating the proportion of three levels of hydrogen storage facilities, namely, hydrogen storage for the hydrogen supply device (low pressure), inter-stage hydrogen storage in the compression system (medium pressure), and hydrogen storage for the ammonia synthesis system (high pressure), the most technically and economically optimal hydrogen storage solution can be provided for various types of ammonia synthesis scenarios, which can not only ensure the technical reliability of new energy hydrogen generation for ammonia synthesis, but also ensure an optimal technical-economic efficiency. In actual production, hydrogen storage with different levels can effectively solve problems of system pressure stability in the process from electrolytic hydrogen generation, hydrogen pressurization configured for synthesis gas and hydrogen usage reduce the impact of fluctuations on equipment and devices, and thereby improving the service life of the devices.

In the present disclosure, the air separation device 02 can respectively ensure a stable output of hydrogen of the low-pressure hydrogen storage container 07, the medium-pressure hydrogen storage container 08 and the high-pressure hydrogen storage container 09 by supplementing nitrogen, to ensure the stable supply of hydrogen, which is preferably realized through the nitrogen generation device of the air separation device 02.

The following process can be realized according to the present disclosure. Isobaric hydrogen storage process: in a case that the hydrogen in the hydrogen storage container is reused, the nitrogen from the nitrogen supply device, for example the air separation device 02, is introduced into the hydrogen storage container from a bottom thereof to maintain a release pressure of the reused hydrogen by making use of the characteristic that the density of nitrogen being greater than the density of hydrogen so as to achieve an energy-saving effect of the hydrogen storage and reuse process. In addition, the nitrogen introduced into the system during the isobaric hydrogen storage process is finally mixed with hydrogen and enters the ammonia synthesis unit 06, and the insufficient nitrogen amount is supplemented and precisely controlled by the nitrogen compressor unit 04.

In the present disclosure, the ammonia synthesis system with green electricity hydrogen generation and isobaric energy-saving hydrogen storage further includes a control center 12 configured to control the operation of the combined compression system 10, the hydrogen supply device 01, the new energy power supply unit 11, the air separation device 02 and the ammonia synthesis unit 06 separately.

The ammonia synthesis system based on the fluctuating hydrogen source provided by the present disclosure has following beneficial effects.
(1) The ammonia synthesis system solves the contradiction between fluctuations in hydrogen supply, such as the fluctuations of new energy electrolytic hydrogen generation and the high stability requirements of traditional ammonia synthesis processes, and the ammonia synthesis system operates more stably and is more flexible in adjustment.
(2) The ammonia synthesis system effectively solves the problem of high energy consumption caused by the loss of pressure head in the hydrogen storage process, and solves the problem of extremely high investment in chemical energy storage (energy storage power station; chemical energy storage refers to electrochemical energy storage, such as batteries; the unit cost of electrical energy storage by battery is higher than that of hydrogen storage, and the investment in the ammonia synthesis process can be reduced by replacing electrochemical energy storage with energy-saving hydrogen storage) in the ammonia synthesis industry, can greatly reduce the share of chemical energy storage in the entire device, and even omit the chemical energy storage device, which greatly improves the technical-economic efficiency of the device.
(3) The ammonia synthesis system can solve problems of high investment in hydrogen storage equipment and poor economic efficiency due to low hydrogen storage density of the current mainstream low-pressure hydrogen storage technology. The technology of coupling hydrogen storage for the hydrogen supply device (low pressure), inter-stage hydrogen storage in the compression system (medium pressure), and hydrogen storage for the ammonia synthesis system (high pressure) can be customized to set the proportion of hydrogen storage facilities at different levels according to specific application scenarios.
(4) In addition to application scenarios of ammonia synthesis by hydrogen generation via new energy, the solution of the present disclosure is also applicable to all other types of ammonia synthesis processes with unstable hydrogen sources, for example, ammonia synthesis by hydrogen generation via fixed bed gas production, and ammonia synthesis by hydrogen generation via plasma gasification.

The present disclosure provides the ammonia synthesis system based on a fluctuating hydrogen source, including: a hydrogen supply device, where a fluctuating amount of hydrogen is provided by the hydrogen supply device; a hydrogen storage container, configured to store the hydrogen provided by the hydrogen supply device; a nitrogen supply device, configured to communicate with the hydrogen storage container to introduce nitrogen into the hydrogen storage container to maintain a stable pressure in the hydrogen storage container. The ammonia synthesis system based on a fluctuating hydrogen source provided by the present disclosure can not only meet requirements of application scenarios where synthesis gas is produced from conventional raw material, but also be well applied to application scenarios where the hydrogen supply for ammonia synthesis fluctuates, for example, the application scenarios where raw material hydrogen for ammonia synthesis is obtained from hydrogen generation by unstable green electricity (with regular and irregular fluctuations) such as wind power, photovoltaic power and hydropower, and even in the case that the green electricity fluctuates in the full load range of 0-100%, the stable production of synthetic ammonia can also be ensured. Compared with the conventional ammonia synthesis process with gaseous hydrogen storage, the system provided by the present disclosure can achieve 100% reuse rate of gaseous hydrogen storage without decompression, that is, there is no pressure loss in hydrogen storage for reuse, thus effectively ensuring technical economy and operation and maintenance economy of the device.

A technical solution of a control method for an ammonia synthesis system based on a fluctuating hydrogen source is further provided according to the present disclosure, where the ammonia synthesis system is the above ammonia synthesis system. The control method is applied to the control center of the ammonia synthesis system.

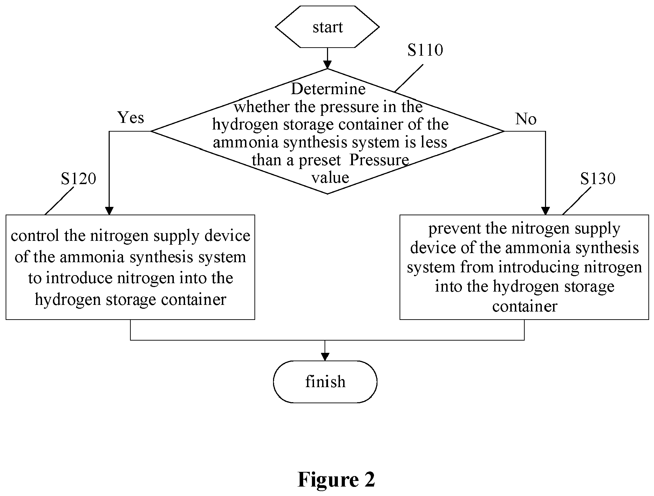

The specific process is shown in Figure 2, which includes the following steps.

In step S110, whether the pressure in the hydrogen storage container of the ammonia synthesis system is less than a preset pressure value is determined.

In a case that the pressure of the hydrogen storage container is less than the preset pressure value, step S 120 is to be performed first, and then return to perform step 110; in a case that the pressure of the hydrogen storage container is greater than or equal to the preset pressure value, step S 130 is to be performed.

The preset pressure value is a pressure value of the hydrogen storage container in a case that the ammonia synthesis system can operate normally, which can be set according to actual needs, and is specifically limited herein, which are all within the scope of protection of the present disclosure.

In step S120, the nitrogen supply device of the ammonia synthesis system is controlled to introduce nitrogen into the hydrogen storage container.

In step S130, the nitrogen supply device of the ammonia synthesis system is prevented from introducing nitrogen into the hydrogen storage container.

Since the density of nitrogen is greater than that of hydrogen, nitrogen is always at the bottom after entering the hydrogen storage container. Therefore, while maintaining the pressure in the hydrogen storage container unchanged, it does not affect the release of hydrogen.

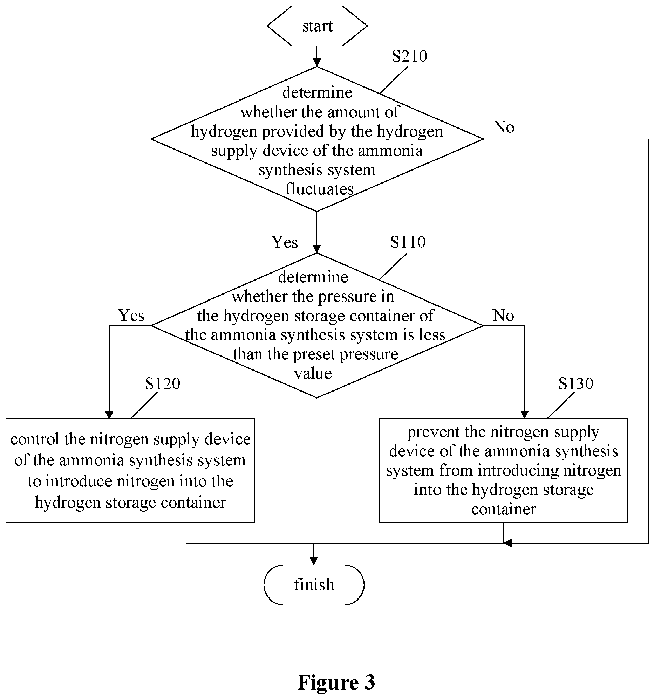

Another technical solution of a control method for an ammonia synthesis system based on a fluctuating hydrogen source is further provided according to the present disclosure, and the specific process is shown in Figure 3The control method according to this technical solution further includes the following steps before the above step S110.

In step S210, whether the amount of hydrogen provided by the hydrogen supply device of the ammonia synthesis system fluctuates is determined.

In a case that the amount of hydrogen provided by the hydrogen supply device fluctuates, step S 110 is performed first; in a case that the amount of hydrogen provided by the hydrogen supply device does not fluctuate, step S110 is not performed.

In practical applications, in a case that the new energy power supply unit connected to the ammonia synthesis system operates stably at full load, the amount of hydrogen provided by the hydrogen supply device is stable; and in a case that the new energy power supply unit connected to the ammonia synthesis system operates at low load or shuts down due to failure, the amount of hydrogen provided by the hydrogen supply device fluctuates.

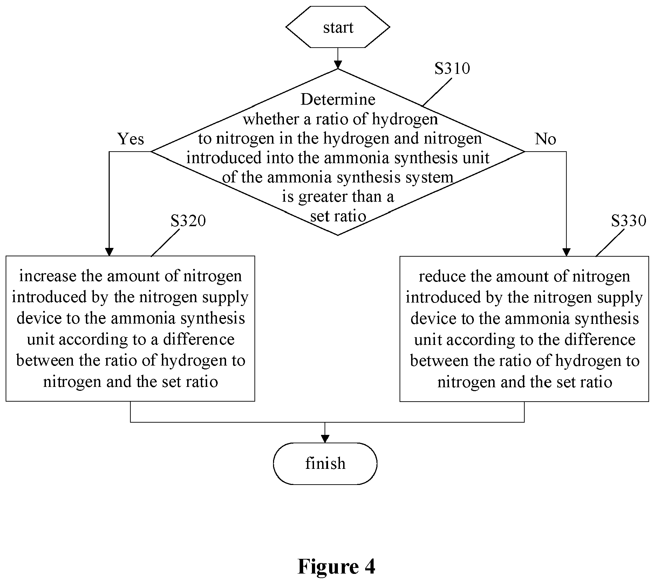

Yet another technical solution of a control method for an ammonia synthesis system based on a fluctuating hydrogen source is further provided according to the present disclosure, and the specific process is shown in Figure 4. The technical solution further includes the following steps based on the above technical solutions.

In step S310, whether a ratio of hydrogen to nitrogen in the hydrogen and nitrogen introduced into the ammonia synthesis unit of the ammonia synthesis system is greater than a set ratio is determined.

In a case that the ratio of hydrogen to nitrogen is greater than the set ratio, step S320 is to be performed; in a case that the ratio of hydrogen to nitrogen is less than or equal to the set ratio, step S330 is to be performed.

In step S320, according to a difference between the ratio of hydrogen to nitrogen and the set ratio, an amount of nitrogen introduced by the nitrogen supply device to the ammonia synthesis unit is increased.

In practical applications, in a case that the ammonia synthesis system includes a nitrogen compressor unit, the amount of nitrogen introduced by the nitrogen supply device to the ammonia synthesis unit is increased by increasing a workload of the nitrogen compressor unit.

In step S330, according to the difference between the ratio of hydrogen to nitrogen and the set ratio, the amount of nitrogen introduced by the nitrogen supply device to the ammonia synthesis unit is reduced.

In practical applications, in a case that the ammonia synthesis system includes a nitrogen compressor unit, the amount of nitrogen introduced by the nitrogen supply device to the ammonia synthesis unit can be reduced by reducing the workload of the nitrogen compressor unit.

In order to further illustrate the present disclosure, the following embodiment is described in detail.

### Embodiment

Referring to Figure 1, Figure 1 is a schematic diagram of an ammonia synthesis system based on a fluctuating hydrogen source according to an embodiment of the present disclosure; where reference numeral 11 represents a new energy power supply unit, 10 represents a combined compression system, 01 represents a hydrogen supply device, and 02 represents an air separation device, 03 represents a hydrogen compressor unit, 04 represents a nitrogen compressor unit, 05 represents a circulating gas compressor unit, 06 represents an ammonia synthesis unit, 07 represents a spherical low-pressure hydrogen storage container, 08 represents a vertical high-pressure hydrogen storage container, 09 represents a high-pressure hydrogen storage pipe bundle, and 12 represents a control center.

### (1) Description of the technological process:

The green electricity produced by the new energy power supply unit 11 is sent to the hydrogen supply device 01, and qualified low-pressure hydrogen (1.5MPa) is produced through power conversion equipment and hydrogen generation equipment. After entering the spherical low-pressure hydrogen storage container 07 for storage and buffering, the hydrogen enters the hydrogen compressor unit 03 of the combined compression system 10 for pressurization, the hydrogen is pressurized to 8.5MPa through the first-stage (first segment) compression, enters the vertical high-pressure hydrogen storage container 08 for storage and buffering, and then enters the second segment of the hydrogen compressor unit 03 to be pressurized through the second-stage (second segment) compression to the pressure of 16.5 MPa, which is the pressure required by the ammonia synthesis, the hydrogen is then sent to the high-pressure hydrogen storage pipe bundle 09 for storage and buffering, and mixed with high-pressure nitrogen (16.5 MPa) from the air separation device 02 and being pressurized by the nitrogen compressor unit 04, and then enters the ammonia synthesis unit 06 for the ammonia synthesis reaction, and finally the product ammonia (with the purity of 99.9%wt and the yield of 99.98%) is produced.

The low-pressure nitrogen (0.4 MPa) generated by the air separation device 02 is pressurized by the nitrogen compressor unit 04 of the combined compression system 10, and then mixed with the high-pressure hydrogen from the hydrogen compressor unit 03 and the hydrogen, which is stored for reuse, of the high-pressure hydrogen storage pipe bundle 09, after precise adjustment and allocation of components, the ammonia synthesis gas is sent to the ammonia synthesis unit 06. The nitrogen generated in the air separation device 02 is introduced into the bottom of the spherical low-pressure hydrogen storage container 07, the vertical high-pressure hydrogen storage container 08 and the high-pressure hydrogen storage pipe bundle 09 respectively, to supplement nitrogen to each of the hydrogen storage containers in time in a case that stored hydrogen is to be reused, so as to ensure stable pressure of the reused hydrogen.

The ammonia synthesis reaction is a cyclic reaction. The synthesis gas that passes through the reactor in a single time is only partially converted into ammonia. The unconverted synthesis gas, after the product ammonia is separated, is called the circulating gas, and the circulating gas is returned to the ammonia synthesis system for re-reaction after being pressurized by the circulating gas compressor unit 05.

Low-pressure, medium-pressure and high-pressure hydrogen storage containers are equipped with complete and reliable pressure indication alarms to monitor hydrogen pressure in real time.

### (2) The new energy power supply unit is at a full-load operating condition:

When the new energy power supply unit 11 is operating stably at full load, the hydrogen supply device 01, air separation device 02, combined compression system 10 and ammonia synthesis unit 06 in the technological process are all operating stably at full load, and the spherical low-pressure hydrogen storage container 07, the vertical high-pressure hydrogen storage container 08 and the high-pressure hydrogen storage pipe bundle 09 are filled with hydrogen of corresponding pressures respectively, and the entire ammonia synthesis system with new energy hydrogen generation operates stably to produce the product ammonia. Under the normal and stable operating condition of the system, the backup nitrogen system of the air separation device 02 is in a standby state, and supplementary nitrogen of the spherical low-pressure hydrogen storage container 07, the vertical high-pressure hydrogen storage container 08 and the high-pressure hydrogen storage pipe bundle 09 is in a cut off state.

### (3) The new energy power supply unit is changed to a low-load operating condition:

When the new energy power supply unit 11 changes from full-load operation to low-load operation (or fluctuation), the main equipment of the air separation device 02 reduces its load accordingly, and the backup nitrogen system of the air separation device 02 is started, to ensure the stable supply of nitrogen to the entire system. The hydrogen supply device 01 correspondingly reduces the load according to the power supply situation. The nitrogen replenishment systems at the bottom of the spherical low-pressure hydrogen storage container 07, the vertical high-pressure hydrogen storage container 08 and the high-pressure hydrogen storage pipe bundle 09 are started to ensure that the hydrogen in each hydrogen storage container is stably injected into the main process system from the container, to ultimately ensure the combined compression system 10 and the ammonia synthesis unit 06 continue to stably operate at full load for a certain period of time, where the period time of stable operation at full load is determined by the capacity of the spherical low-pressure hydrogen storage container 07, the vertical high-pressure hydrogen storage container 08 and the high-pressure hydrogen storage pipe bundle 09.

In order to ensure the reliable and stable operation of the entire ammonia synthesis system with new energy hydrogen generation, the production load of the main process system can be adjusted (automatically or manually), to ensure long-term stable operation of the system.

### (4) Shutdown condition of the new energy power supply unit due to failure:

When the new energy power supply unit 11 suddenly shutdown due to failure during operation at full load or low load, a shutdown signal is sent to the control center 12. In this case, the hydrogen supply device 01 stops due to the loss of power supply, and the hydrogen generation is stopped; the main equipment of the air separation device 02 stops due to the loss of power supply, and the backup nitrogen system of the air separation device is started, to ensure the stable supply of nitrogen to the entire system. The nitrogen replenishment systems at the bottoms of the spherical low-pressure hydrogen storage container 07, the vertical high-pressure hydrogen storage container 08 and the high-pressure hydrogen storage pipe bundle 09 are started to ensure that the hydrogen in each hydrogen storage container is stably injected into the main process system from the container, to ensure the safe operation of the entire system. After receiving the load reduction signal from the control center, the combined compression system 10 and the ammonia synthesis unit 06 adjust the production load until the system safely shuts down.

The ammonia synthesis system is adjusted from 100% load operation to 70% load operation. When the hydrogen content of the outlet gas of the hydrogen compressor unit 03 is monitored to be lower than 95%vol, an interlocking stop signal for the entire ammonia synthesis system with new energy hydrogen generation is sent by the control center 12, and the system stops safely. In the process where the load of the entire ammonia synthesis system is adjusted to the shutdown state, the ammonia output is maintained at more than 70% of the rated output, the purity is 99.9%wt, and the yield is 99.98%.

It should be noted that the numerical values mentioned in the above embodiments is only a specific example. In practical applications, the numerical values include but not limited to the above examples, which depends on the specific situation and is within the scope of protection of the present disclosure.

Based on the above description of the disclosed embodiments, those skilled in the art are capable of carrying out or using the present application. It is obvious for those skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

## Claims

1. An ammonia synthesis system based on a fluctuating hydrogen source, comprising:
a hydrogen supply device, wherein a fluctuating amount of hydrogen is provided by the hydrogen supply device;
a hydrogen storage container, configured to store the hydrogen provided by the hydrogen supply device;
a nitrogen supply device, configured to communicate with the hydrogen storage container to introduce nitrogen into the hydrogen storage container to maintain a stable pressure in the hydrogen storage container.

2. The ammonia synthesis system according to claim 1, wherein the hydrogen storage container comprises multiple hydrogen storage containers for storing hydrogen at different pressures, the number of the multiple hydrogen storage containers is two or more; the nitrogen supply device is connected to each of the multiple hydrogen storage containers respectively, to ensure a stable pressure in each of the multiple hydrogen storage containers by supplementary nitrogen.

3. The ammonia synthesis system according to claim 2, wherein the multiple hydrogen storage containers comprise a low-pressure hydrogen storage container, a medium-pressure hydrogen storage container, and a high-pressure hydrogen storage container.

4. The ammonia synthesis system according to claim 3, further comprising:
a combined compression system, wherein the combined compression system at least comprises a hydrogen compressor unit; and wherein the hydrogen compressor unit is provided with a gas inlet being connected to the hydrogen supply device, and a gas outlet being connected to an ammonia synthesis unit.

5. The ammonia synthesis system according to claim 4, wherein the low-pressure hydrogen storage container is connected to a hydrogen outlet of the hydrogen supply device; the medium-pressure hydrogen storage container is connected to an inter-segment gas outlet of the hydrogen compressor unit; the high-pressure hydrogen storage container is connected to the gas outlet of the hydrogen compressor unit.

6. The ammonia synthesis system according to claim 2, wherein the nitrogen supply device is configured to supply nitrogen through a bottom of each of the multiple hydrogen storage containers.

7. The ammonia synthesis system according to claim 1, wherein the nitrogen supply device is an air separation device, and the air separation device comprises a nitrogen generation device and/or a backup nitrogen system.

8. The ammonia synthesis system according to claim 7, wherein in a case that the nitrogen supply device is the nitrogen generation device, two flow paths are provided for the nitrogen drawn from the nitrogen generation device, one of the two flow paths is in communication with the hydrogen storage container, and the other of the two flow paths is configured to provide a nitrogen source for an ammonia synthesis reaction.

9. The ammonia synthesis system according to claim 4, wherein the low-pressure hydrogen storage container is a vertical pressure vessel or a spherical pressure vessel; wherein the hydrogen is allowed to flow in both directions in a pipeline between the low-pressure hydrogen storage container and the gas inlet of the hydrogen compressor unit to reach an equal pressure.

10. The ammonia synthesis system according to claim 4, wherein the medium-pressure hydrogen storage container is a vertical high-pressure hydrogen storage container; the hydrogen is allowed to flow in both directions between the medium-pressure hydrogen storage container and a position between segments of the hydrogen compressor unit to reach an equal pressure.

11. The ammonia synthesis system according to claim 4, wherein the high-pressure hydrogen storage container is a high-pressure hydrogen storage pipe bundle; the hydrogen is allowed to flow in both directions in a pipeline between the high-pressure hydrogen storage container and the gas outlet of the hydrogen compressor unit to reach an equal pressure.

12. The ammonia synthesis system according to claim 4, wherein the combined compression system further comprises a nitrogen compressor unit and a circulating gas compressor unit, wherein the nitrogen compressor unit is provided with a gas inlet being connected to the nitrogen supply device, and a gas outlet being connected to the ammonia synthesis unit; the circulating gas compressor unit is configured to compress circulating gas discharged from the ammonia synthesis unit for recycling.

13. The ammonia synthesis system according to claim 12, further comprising a control center, wherein the control center is configured to control the combined compression system, the nitrogen supply device and the ammonia synthesis unit.

14. The ammonia synthesis system according to any one of claims 1 to 13, wherein the ammonia synthesis system is applicable to scenarios including ammonia synthesis by hydrogen generation via new energy, ammonia synthesis by hydrogen generation via fixed bed gas production, and ammonia synthesis by hydrogen generation via plasma gasification.

15. A control method for an ammonia synthesis system based on a fluctuating hydrogen source, wherein the ammonia synthesis system is the ammonia synthesis system according to any one of claims 1 to 14, the control method is applied to a control center of the ammonia synthesis system, and the control method comprises:
determining whether a pressure in the hydrogen storage container of the ammonia synthesis system is less than a preset pressure value; and
in a case that the pressure in the hydrogen storage container is less than the preset pressure value, controlling the nitrogen supply device of the ammonia synthesis system to introduce nitrogen into the hydrogen storage container firstly, and then returning to perform the step of determining whether the pressure in the hydrogen storage container of the ammonia synthesis system is less than the preset pressure value.

16. The control method according to claim 15, wherein before the step of determining whether the pressure in the hydrogen storage container of the ammonia synthesis system is less than the preset pressure value, the control method further comprises:
determining whether an amount of hydrogen provided by the hydrogen supply device of the ammonia synthesis system fluctuates; and
in a case that the amount of hydrogen provided by the hydrogen supply device fluctuates, performing the step of determining whether the pressure in the hydrogen storage container of the ammonia synthesis system is less than the preset pressure value.

17. The control method according to claim 15 or 16, further comprising:
determining whether a ratio of hydrogen to nitrogen in the hydrogen and nitrogen introduced into an ammonia synthesis unit of the ammonia synthesis system is greater than a set ratio; and
in a case that the ratio of hydrogen to nitrogen is greater than the set ratio, increasing an amount of nitrogen introduced by the nitrogen supply device to the ammonia synthesis unit according to a difference between the ratio of hydrogen to nitrogen and the set ratio.

18. The control method according to claim 17, wherein in a case that the ratio of hydrogen to nitrogen is less than the set ratio, the control method further comprises:
decreasing the amount of nitrogen introduced by the nitrogen supply device to the ammonia synthesis unit according to the difference between the ratio of hydrogen to nitrogen and the set ratio.

19. The control method according to claim 18, wherein in a case that the ammonia synthesis system comprises a nitrogen compressor unit, the step of increasing or decreasing the amount of nitrogen introduced by the nitrogen supply device to the ammonia synthesis unit comprising:
increasing or decreasing a workload of the nitrogen compressor unit.
